# EUROPEAN PATENT SPECIFICATION

(11) **EP 4 339 966 B1**
(45) Date of publication and mention of the grant of the patent: **22.07.2026**
(21) Application number: 22828860.1
(22) Date of filing: 10.01.2022
(51) Int. Cl.: G21C 3/32

(54) **DEVICE FOR TRAPPING DEBRIS IN A NUCLEAR FUEL ASSEMBLY**
VORRICHTUNG ZUM EINFANGEN VON ABLAGERUNGEN IN EINEM KERNBRENNSTABBÜNDEL
DISPOSITIF POUR PIÉGER DES PARTICULES SOLIDES DANS UN ASSEMBLAGE DE COMBUSTIBLE DE RÉACTEUR NUCLÉAIRE

(30) Priority: 21.06.2021 RU 2021118331
(43) Date of publication of application: 20.03.2024
(73) Proprietor: Joint-stock Company "Tvel" (Jsc Tvel), Moscow 115409 (RU); Publichnoe Aktsionernoe Obshchestvo "Novosibirsky Zavod Khimkontsentratov" (PAO NZHK), Novosibirsk 630110 (RU)
(72) Inventor: IVANOV, Roman Sergeevich, Novosibirsk, 630110 (RU); ENIN, Anatoly Alekseevich, Novosibirsk, 630110 (RU); SHUSTOV, Mstislav Aleksandrovich, Novosibirsk, 630017 (RU); MURAVIEV, Andrey Vladimirovich, Novosibirsk, 630129 (RU); MYAKOV, Sergey Aleksandrovich, Nizhny Novgorod, 603040 (RU); SIMANOVSKAYA, Irina Evgenyevna, Nizhny Novgorod, 603086 (RU); SHOLIN, Evgeny Vasilyevich, Novosibirsk, 603132 (RU); UGRYUMOV, Aleksandr Valeryevich, Moscow, 119313 (RU)
(74) Representative: Danubia Patent & Law Office LLC
(86) International application number: PCT/RU2022/000003
(87) International publication number: WO 2022/271049

(56) References cited:
- WO-A1-02/058075
- WO-A1-02/075746
- JP-A- 2001 141 866
- RU-C1- 2 106 027
- RU-C1- 2 610 913
- RU-C1- 2 742 042
- RU-C2- 2 264 666
- US-A- 5 867 551
- US-A1- 2013 248 434

## Description

### TECHNICAL FIELD

The invention relates to nuclear power engineering and can be used for fuel assemblies of nuclear reactors WWER and PWR.

### BACKGROUND

An anti-debris filter for a nuclear reactor fuel assembly is known (see patent RU 2264666, publ. November 20, 2005), which is a densely perforated flat plate with chevron-shaped holes 2 mm wide. The drawback of this technical solution is the small thickness of the crosspieces between the holes (0.3...0.6mm) with a plate thickness of 6...8mm, which leads to increased labor costs during manufacturing, as well as significant hydraulic resistance.

The closest in technical essence and achieved result to the proposed device is a filter for retaining debris in a fuel assembly of a nuclear reactor (see patent RU 2610913, publ. February 17, 2017), which can be selected as a prototype, that is mounted in a bottom nozzle of the fuel assembly and consists of two plate-type filter elements arranged one above the other and containing two groups of intersecting rectilinear plates forming a series of curvilinear channels with rectangular cross-section for the passage of coolant along the fuel assembly axis, while the channels of the lower filter element are inclined toward the longitudinal axis of the fuel assembly, and the channels of the upper filter element arranged between the lower filter element and the supporting grille are parallel to the fuel assembly axis.

The drawback of this design is its high manufacturing complexity, since it consists of individual plates, and a high coefficient of hydraulic resistance.

A yet further anti-debris filter element to be installed in a fuel assembly of a nuclear reactor is known from RU 2742042 C1. Said RU patent discloses a device for trapping debris in a fuel assembly mounted in the bottom nozzle of the fuel assembly in accordance with the preamble of claim 1.

### DISCLOSURE OF INVENTION

Technical object of the present invention is to increase reliability of fuel assemblies during their long-term operation in a nuclear reactor, reducing the coefficient of hydraulic resistance with simultaneous reducing the labor intensity of manufacturing the device.

Technical result of the present invention is to provide a device capable of intercepting and trapping debris of any size present in a coolant circuit, without decrease in flow cross section for the coolant.

The problem is solved by a device for trapping debris in a fuel assembly of a nuclear reactor, which is mounted in the bottom nozzle of the fuel assembly, the device consisting of two interconnected plate-type filter elements arranged one above the other and having channels for a coolant passage having a length and a width, wherein the channels in the lower filter element are inclined toward the axis of the fuel assembly, and the channels in the upper filter element are parallel to the axis of the fuel assembly. According to the present invention, the channels for the coolant passage are produced by waterjet cutting to form slots in the area of a filter element plate, the slots being separated lengthwise by vertical ribs and widthwise by crosspieces, wherein roundings are formed on the vertical ribs and the crosspieces between the channels for the coolant passage of each of the filter elements, and a gap is provided between the vertical ribs and crosspieces formed in the plates of different filter elements.

The problem may also be solved by the roundings of the vertical ribs and crosspieces being provided on the side of the gap.

The problem may also be solved by the crosspieces of the upper and lower filter elements being offset with respect to one another.

The problem is alternatively solved by the crosspieces of the upper filter element being inclined toward the axis of the fuel assembly in the direction opposite to the incline of the channels of the lower filter element.

The proposed design of the trapping device allows to solve the object of the present invention. In operation of a fuel assembly in a nuclear reactor, the coolant flow containing debris enters the fuel assembly inlet. It is known that particles that can cause fretting wear of fuel elements claddings, are mainly fragments of wire of various sizes. When moving in a coolant flow, these particles are oriented with their long side along the current lines, that is, along the lines of less resistance. Thus, the particles move with their long axis parallel to the fuel assembly axis. When meeting a filter element having inclined channels, the particles are oriented in parallel to these channels and fall into the gap between the crosspieces of the channels of plates of different filter elements, getting stuck in them. The presence of roundings on the vertical ribs and the crosspieces between the channels reduces formation of vortices after the crosspieces, which aids in reducing the coefficient of hydraulic resistance.

Since the vortices are mainly formed in the gap between the plates, making roundings on the vertical ribs and the crosspieces only on the side of the gap therebetween allows to reduce the coefficient of hydraulic resistance of the filter element compared to the prototype.

Forming the channels for a coolant passage as slots in the plate of the filter element, for example using the waterjet cutting, makes it possible to simplify manufacture of the device for trapping debris, thereby reducing labor costs and increasing labor productivity.

Offset of the crosspieces of the upper and lower filter elements in respect to each other allows trapping of smaller particles in the coolant.

Arrangement of the crosspieces of the upper filter element inclined toward the axis of the fuel assembly in the direction opposite to the inclination of the channels of the lower filter element, allows to improve the filtering ability of the device.

Making channels from a single plate increases reliability of the filter elements and fuel assembly in general.

### Brief description of drawings

The essence of the invention is illustrated by the drawings.

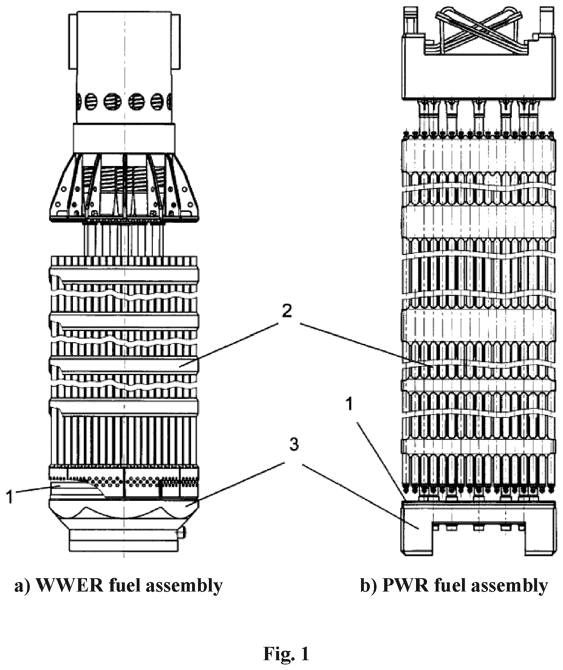

Figure 1 shows a perspective view of the fuel assembly of a nuclear reactor with the device for trapping debris according to the present invention:
   a) WWER fuel assembly;
   b) PWR fuel assembly.

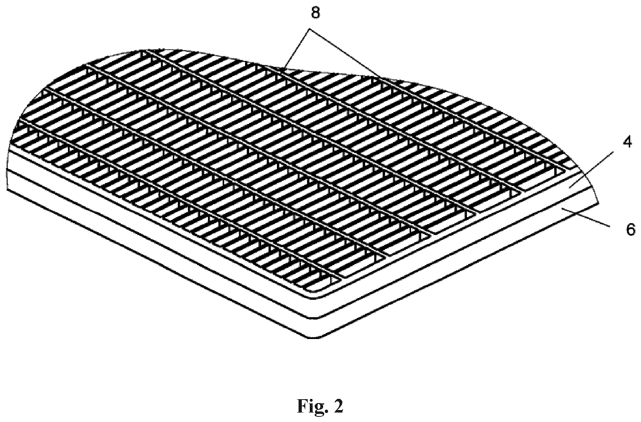

Fig.2 shows a cross-section of the device for trapping debris in a fuel assembly.

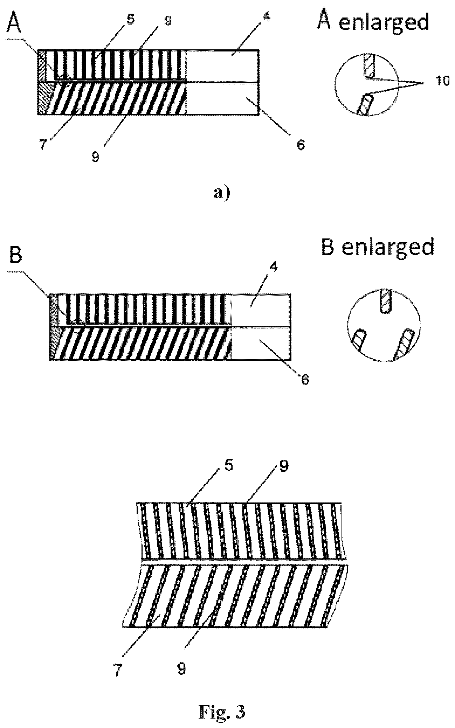

Fig.3 shows a fragment of the device for trapping debris in a fuel assembly:
   a) - with the rounding on the vertical ribs and on the crosspieces between the channels;
   b) - with offset crosspieces of the upper and lower filter elements;
   c) - with the crosspieces of the upper filter element inclined toward the axis of the fuel assembly.

A device (1) for trapping debris in a nuclear fuel assembly (2) is mounted in the bottom nozzle (3) of the fuel assembly (2) and comprises two interconnected plate-type filter elements as a plate (4) wherein channels (5) for a coolant passage are made parallel to the axis of the fuel assembly (2), and a plate (6) with channels (7) inclined toward the axis of the fuel assembly (2). The channels are separated lengthwise along the plates (4,6) by vertical ribs (8) and widthwise by crosspieces (9). The length of the channels is defined by a pitch between the vertical ribs (8), and the width of the channels (5,7) is defined by a pitch and location of the crosspieces (9). Roundings (10) are formed on the vertical ribs (8) and the crosspieces (9). The crosspieces (9) of the upper filter element (4) can be made with an inclination to the fuel assembly axis in the direction opposite to the direction of the inclination of the channels (7) of the plate (6).

### Best embodiment of the invention

The device for trapping debris in a fuel assembly of a nuclear reactor operates in the following way.

The device (1) is made of two interconnected plates (4,6) arranged one above the other, wherein slots forming the channels (5,7) are made, for example, using waterjet cutting method. The slots are separated lengthwise by vertical ribs (8) and widthwise by crosspieces (9). Channels (5) of the upper plate (4) are parallel to the axis of the fuel assembly (2), and channels (7) of the lower plate (6) are inclined toward the axis of the fuel assembly (2). Roundings (10) can be formed on the vertical ribs (8) of the channels and on the crosspieces (9). A gap (not shown) is provided between the vertical ribs (8) and crosspieces (9) of the different plates. The device made in such a way is mounted in the bottom nozzle of the fuel assembly (2). During operation of the fuel assembly in the nuclear reactor the coolant flow containing debris enters an inlet of the fuel assembly (2). Particles that can cause fretting wear of the fuel elements claddings are mainly wire fragments of various sizes. When moving in the coolant flow these particles are oriented with their long side along the current lines, that is, along the lines of less resistance. Thus, the particles move with their long axis parallel to the fuel assembly axis. When interacting with the inclined channels, the particles are oriented parallel to the channels and fall into the gap between the ribs (8) and crosspieces (9) of different plates (4,6) of the trapping device. Roundings (10) provided on the ribs (8) and crosspieces (9) reduce formation of the vortices after the crosspieces, which aids in reducing the coefficient of hydraulic resistance. Making the filter elements from single plates further increases reliability of both the device and the fuel assembly in general. Inclination of the crosspieces (9) of the upper filter element (4) toward the fuel assembly axis improves filtering capacity by allowing the filter to trap debris with smaller linear dimensions.

At the end of the operation, the fuel assembly (2) is unloaded from the reactor, and the debris trapped by the trapping device (1) is also removed with the fuel assembly (2).

### Industrial applicability

Thus, the device for trapping debris in a fuel assembly of a nuclear reactor increases reliability of the fuel assemblies during their long-term operation in a nuclear reactor, reduces the coefficient of hydraulic resistance, and reduces the labor intensity of manufacturing the device.

## Claims

1. A device (1) for trapping debris configured to be mounted in the bottom nozzle (3) of a fuel assembly (2) of a nuclear reactor, the device (1) consisting of two interconnected plate-type filter elements (4, 6) arranged one above the other and having channels (5, 7) for a coolant passage having a length and a width,
wherein the channels (5, 7) for the coolant passage are formed as slots in the plates of the filter elements (4, 6), the slots being separated lengthwise by vertical ribs (8) and widthwise by crosspieces (9),
wherein the channels (7) in the lower filter element (6) are inclined toward the axis of the fuel assembly (2), and
wherein the channels (5) in the upper filter element (4) are parallel to the axis of the fuel assembly (2) or inclined toward the axis of the fuel assembly (2) in a direction opposite to the incline of the channels (7) of the lower filter element (5),
**characterized in that**
a gap is provided between the vertical ribs (8) and the crosspieces (9) formed in the different filter elements (4, 6), and
**in that** roundings (10) are formed on the vertical ribs (8) and the crosspieces (9) between the channels (5, 7) for the coolant passage of each of the filter elements (4, 6).

2. The device according to claim 1, wherein the roundings (10) of the vertical ribs (8) and of the crosspieces (9) are provided on the side of the gap.

3. The device according to claim 1, wherein the crosspieces (9) of the upper and the lower filter elements (4, 6) are offset with respect to one another.

## Patentansprüche

1. Vorrichtung (1) zum Einfangen von Ablagerungen, die zur Montage in der Bodendüse (3) eines Brennelements (2) eines Kernreaktors ausgelegt ist, wobei die Vorrichtung (1) aus zwei miteinander verbundenen, plattenartigen Filterelementen (4, 6) besteht, die übereinander angeordnet sind und Kanäle (5, 7) für einen Kühlmitteldurchgang mit einer Länge und einer Breite aufweisen,
wobei die Kanäle (5, 7) für den Kühlmitteldurchgang als Schlitze in den Platten der Filterelemente (4, 6) ausgebildet sind, wobei die Schlitze in Längsrichtung durch vertikale Rippen (8) und in Querrichtung durch Querstücken (9) getrennt sind,
wobei die Kanäle (7) im unteren Filterelement (6) zur Achse des Brennelements (2) hin geneigt sind, und
wobei die Kanäle (5) im oberen Filterelement (4) parallel zur Achse des Brennelements (2) verlaufen oder zur Achse des Brennelements (2) in einer Richtung geneigt sind, die der Neigung der Kanäle (7) des unteren Filterelements (6) entgegengesetzt ist,
**dadurch gekennzeichnet, dass** zwischen den vertikalen Rippen (8) und den in den verschiedenen Filterelementen (4, 6) ausgebildeten Querstücken (9) ein Spalt vorgesehen ist,
und dass an den vertikalen Rippen (8) und den Querstücken (9) zwischen den Kanälen (5, 7) für den Kühlmitteldurchgang jedes der Filterelemente (4, 6) Abrundungen (10) ausgebildet sind.

2. Vorrichtung nach Anspruch 1, wobei die Abrundungen (10) der vertikalen Rippen (8) und der Querstücken (9) auf der Seite des Spaltes vorgesehen sind.

3. Vorrichtung nach Anspruch 1, wobei die Querstücken (9) des oberen und des unteren Filterelements (4, 6) zueinander versetzt sind.

## Revendications

1. Dispositif (1) de piégeage de débris, conçu pour être monté dans la embout inférieure (3) d'un assemblage combustible (2) d'un réacteur nucléaire, le dispositif (1) étant constitué de deux éléments filtrants de type plaque (4, 6) reliés entre eux, disposés l'un au-dessus de l'autre et comportant des canaux (5, 7) pour le passage du fluide de refroidissement, ayant une longueur et une largeur,
dans lequel les canaux (5, 7) pour le passage du fluide de refroidissement sont formés sous forme de fentes dans les plaques des éléments filtrants (4, 6), les fentes étant séparées dans le sens de la longueur par des nervures verticales (8) et dans le sens de la largeur par des traverses (9),
dans lequel les canaux (7) de l'élément filtrant inférieur (6) sont inclinés vers l'axe de l'assemblage combustible (2), et
dans lequel les canaux (5) de l'élément filtrant supérieur (4) sont parallèles à l'axe de l'assemblage combustible (2) ou inclinés vers l'axe de l'assemblage combustible (2) dans une direction opposée à l'inclinaison des canaux (7) de l'élément filtrant inférieur (5),
**caractérisé en ce qu'**un espace est prévu entre les nervures verticales (8) et les traverses (9) formées dans les différents éléments filtrants (4, 6),
et **en ce que** des arrondis (10) sont formés sur les nervures verticales (8) et les traverses (9) entre les canaux (5, 7) pour le passage du fluide de refroidissement de chacun des éléments filtrants (4, 6).

2. Dispositif selon la revendication 1, dans lequel les arrondis (10) des nervures verticales (8) et des traverses (9) sont prévus du côté de l'espace.

3. Dispositif selon la revendication 1, dans lequel les traverses (9) des éléments filtrants supérieur et inférieur (4, 6) sont décalées les unes par rapport aux autres.
